(19)

Europäisches
Patentamt

European
Patent Office

Office européen
des brevets

(11) **EP 4 578 978 A1**

(12) **EUROPEAN PATENT APPLICATION**
published in accordance with Art. 153(4) EPC

(43) Date of publication:
**02.07.2025 Bulletin 2025/27**

(21) Application number: **23872573.3**

(22) Date of filing: **28.09.2023**

(51) International Patent Classification (IPC):
*C22C 38/00* (2006.01)          *C21D 8/02* (2006.01)
*C21D 8/10* (2006.01)          *C22C 38/60* (2006.01)

(52) Cooperative Patent Classification (CPC):
**C21D 8/02; C21D 8/10; C22C 38/00; C22C 38/60**

(86) International application number:
**PCT/JP2023/035555**

(87) International publication number:
**WO 2024/071353 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 JP 2022157171**

(71) Applicant: **JFE Steel Corporation
Tokyo 100-0011 (JP)**

(72) Inventors:
• **INOUE, Naho**
  **Tokyo 100-0011 (JP)**
• **OKANO, Hiroshi**
  **Tokyo 100-0011 (JP)**
• **NISHIHARA, Yoshihiro**
  **Tokyo 100-0011 (JP)**
• **IZUMI, Daichi**
  **Tokyo 100-0011 (JP)**

(74) Representative: **Haseltine Lake Kempner LLP
Bürkleinstrasse 10
80538 München (DE)**

(54) **STEEL MATERIAL HAVING EXCELLENT FATIGUE CHARACTERISTICS IN HYDROGEN, METHOD FOR PRODUCING SAME, STEEL PIPE, AND METHOD FOR MANUFACTURING SAME**

(57)     To provide a steel material with a good fatigue property in a high-pressure hydrogen gas environment, which is suitable for a steel structure used in a high-pressure hydrogen gas environment, such as a line pipe for 100% hydrogen gas or a natural gas containing hydrogen at a hydrogen partial pressure of 1 MPa or more (natural gas is a gas containing hydrocarbons, such as methane and ethane, as main components), a method for producing the steel material, a steel pipe, and a method for producing the steel pipe.

The steel material with a good fatigue property in hydrogen has a specific chemical composition and a specific microstructure and has a crack growth rate da/dN of $1.0 \times 10^{-6}$ m·cycle$^{-1}$ or less at a stress intensity factor of 20 MPa $\sqrt{m}$ in hydrogen of 1 MPa or more.

**Description**

Technical Field

The present invention relates to a steel material with a good fatigue property in hydrogen, a method for producing the steel material, a steel pipe, and a method for producing the steel pipe.

Background Art

There is a line pipe for transporting natural gas as an existing energy infrastructure. Such a steel material has been required to suppress the occurrence of hydrogen-induced cracking in a sour environment. On the other hand, in recent years, hydrogen has attracted a great deal of attention worldwide as a clean energy source for the construction of a decarbonizing society. Thus, for the purpose of transporting a large amount of hydrogen gas, construction of a hydrogen gas transportation network that pressure-feeds natural gas partially mixed with hydrogen or hydrogen gas as an alternative through a natural gas line pipe has been studied. The transport pressure in such a pipeline operation is assumed to be a high pressure of 1 to 40 MPa, and line pipes are placed in a high-pressure hydrogen gas exposure environment. A steel material used in such an environment has a concern about the occurrence of "hydrogen embrittlement" in which hydrogen enters the steel and degrades its characteristics. Thus, it is necessary to have not only high toughness and sour resistance required for conventional line pipes but also hydrogen embrittlement resistance required in a hydrogen gas environment.

An austenitic stainless steel, such as SUS 316L, which is more resistant to hydrogen embrittlement than low-alloy steels, has been used for a steel structure used in a high-pressure hydrogen gas environment. However, an austenitic stainless steel, such as SUS 316L, is high in steel material cost and has low strength, and when designed to withstand a high hydrogen pressure, has a large wall thickness and results in an increased price of a structure for hydrogen itself. Thus, there has been a strong demand for a low-alloy steel material that can withstand a high-pressure hydrogen gas environment at a lower cost for a steel structure for hydrogen.

In response to such a demand, a steel for a high-pressure hydrogen environment described in Patent Literature 1 is a steel used in a high-pressure hydrogen environment, in which Ca/S is less than 1.5 or 11 or more to reduce the diffusible hydrogen concentration ratio and suppress embrittlement due to diffusible hydrogen.

Patent Literature 2 discloses that a low-alloy high-strength steel adjusted to have a specific chemical composition is used in the tensile strength range of 900 to 950 MPa in the atmosphere to increase the reduction in area and elongation as compared with JIS G 3128 SHY685NS in a 45-MPa hydrogen atmosphere and improve high-pressure hydrogen environment embrittlement resistance characteristics.

A low-alloy high-strength steel described in Patent Literature 3 is a Cr-Mo high-strength low-alloy steel with good elongation and reduction-in-area characteristics even in a 45-MPa hydrogen atmosphere and with excellent high-pressure hydrogen environment embrittlement resistance provided by tempering at a relatively high temperature of 560°C to 580°C to adjust the grain size number after tempering to 8.4 or more and the tensile strength in a very narrow range of 900 to 950 MPa.

Patent Literature 4 proposes a low-alloy steel for a high-pressure hydrogen gas environment. In the low-alloy steel described in Patent Literature 4, adding V, increasing the Mo content as compared with existing steels, increasing the tempering temperature, and utilizing a V-Mo carbide improve the carbide form at a grain boundary and greatly improve hydrogen environment embrittlement resistance.

Patent Literature 5 proposes a steel for a high-pressure hydrogen gas storage container with high hydrogen resistance. According to the technique described in Patent Literature 5, stress relief annealing for an extended period after normalizing treatment in the production of a steel plate finely and densely disperses and precipitates an MC carbide (Mo, V) C and improves the hydrogen resistance, such as hydrogen embrittlement resistance, of the steel.

Patent Literature 6 proposes a steel material for high-pressure hydrogen storage. Patent Literature 6 proposes a steel material with a metallic microstructure composed of 90% or more by area of a bainite-based microstructure in which cementite with an average grain size of 50 nm or less and an average aspect ratio of 3 or less is dispersedly precipitated in the bainite.

Non Patent Literature 1 describes fatigue strength of low-alloy steel.

Citation List

Patent Literature

PTL 1: Japanese Unexamined Patent Application Publication No. 2005-2386
PTL 2: Japanese Unexamined Patent Application Publication No. 2009-46737
PTL 3: Japanese Unexamined Patent Application Publication No. 2009-275249
PTL 4: Japanese Unexamined Patent Application Publication No. 2009-74122
PTL 5: Japanese Unexamined Patent Application Publication No. 2010-37655
PTL 6: Japanese Unexamined Patent Application Publication No. 2012-107332

Non Patent Literature

NPL 1: Matsunaga et al., Int J Hydrogen Energy, Vol. 40(2015), pp. 5739-5748

Summary of Invention

Technical Problem

With respect to the pressure in a line pipe, due to fluctuations during operation or periodical shutdown, stress is repeatedly applied to the structure. Thus, when designing a steel structure, such as a line pipe, it is essential to consider fatigue fracture. However, as described in Non Patent Literature 1, it is known that the fatigue life of a material decreases in a high-pressure hydrogen environment. This means that the service life of a line pipe material decreases when the line pipe material is designed based on a conventional natural gas line pipe. The related art described above can suppress the occurrence of hydrogen-induced cracking in a sour environment but cannot sufficiently increase fatigue strength in hydrogen gas, that is, there is a problem in that it is difficult to achieve both the suppression of the occurrence of hydrogen-induced cracking in a sour environment and high fatigue strength in hydrogen gas, which more easily affects the service life.

In view of the problems of the related art, it is an object of the present invention to provide a steel material with a good fatigue property in a high-pressure hydrogen gas environment, which is suitable for a steel structure used in a high-pressure hydrogen gas environment, such as a line pipe for 100% hydrogen gas or a natural gas containing hydrogen at a hydrogen partial pressure of 1 MPa or more (natural gas is a gas containing hydrocarbons, such as methane and ethane, as main components), a method for producing the steel material, a steel pipe, and a method for producing the steel pipe.

The phrase "a good fatigue property in a high-pressure hydrogen gas environment", as used herein, means that the crack growth rate $da/dN$ at a stress intensity factor range of 20 MPa $\sqrt{m}$ is $1.0 \times 10^{-6}$ m·cycle$^{-1}$ or less, as determined by a fatigue test in accordance with ASTM E647 at a frequency of 1 Hz, a repetitive waveform of a sine wave, a control method of load control, and a stress ratio of $R = 0.1$, in both environments of hydrogen gas at room temperature (20°C $\pm$ 10°C) and at a pressure of 1 MPa or more and a natural gas (the main components are hydrocarbons, such as methane and ethane) mixed atmosphere containing hydrogen at a hydrogen partial pressure of 1 MPa or more. The natural gas containing hydrogen at a hydrogen partial pressure of 1 MPa or more, for example, has a hydrogen concentration of 30% or less by volume and a pressure of 30 MPa or less as the entire gas.

When the crack growth rate $da/dN$ in a hydrogen environment is $1.0 \times 10^{-6}$ m·cycle$^{-1}$ or less, it is possible to design a structural steel for hydrogen in a thickness range that is possible in the production process.

Solution to Problem

From the above perspective, the present inventors have conducted extensive studies on the conditions to be satisfied by various steel materials in hydrogen gas and have found a novel steel material and a novel steel pipe with a good fatigue property in hydrogen.

The present invention has been further studied based on such new findings, and the gist of the present invention is as follows:

[1] A steel material with a good fatigue property in hydrogen, the steel material having a chemical composition containing:

on a mass percent basis,
C: 0.02% to 0.15%,
Si: 0.05% to 0.5%,
Mn: 0.3% to 2.0%,
Al: 0.01% to 0.15%,
N: 0.0005% to 0.008%,
P: 0.03% or less,

S: 0.01% or less,
O: 0.01% or less,
Nb: more than 0% and 2.5% or less,
H: 0.0010% or less,
Cu: 0% to 2.5%,
Ni: 0% to 2.5%,
Cr: 0% to 2.5%,
Mo: 0% to 2.0%,
V: 0% to 0.5%,
Ti: 0% to 0.5%,
W: 0% to 2.5%,
B: 0% to 0.005%,
Sn: 0% to 0.03%,
Sb: 0% to 0.3%,
Ca: 0% to 0.01%,
Mg: 0% to 0.01%, and
REM: 0% to 0.005%,
the remainder being Fe and incidental impurities,
wherein the number of Nb precipitates with an equivalent circular diameter of 2 nm or more and 100 nm or less is 10 pieces/$\mu$m$^2$ or more, and
a crack growth rate da/dN at a stress intensity factor of 20 MPa $\sqrt{m}$ in hydrogen of 1 MPa or more is 1.0 x 10$^{-6}$ m·cycle$^{-1}$ or less.

[2] A method for producing a steel material, the method including:

a heating step of heating a slab with the chemical composition according to [1] at 1000°C to 1250°C;
a hot rolling step of rolling the slab heated in the heating step at a finish rolling delivery temperature of an Ar$_3$ temperature or higher;
a controlled cooling step of cooling a steel plate obtained in the hot rolling step under a condition in which an average cooling rate in the range of 1000°C to 400°C is 10°C/s or more in terms of a temperature at a plate thickness center and a cooling stop temperature ranges from 250°C to 650°C; and
a dehydrogenation treatment step of subjecting the steel plate obtained in the controlled cooling step to dehydrogenation treatment (for removing hydrogen from steel materials).

[3] A steel pipe with a good fatigue property in hydrogen, the steel pipe having a chemical composition containing:

on a mass percent basis,
C: 0.02% to 0.15%,
Si: 0.05% to 0.5%,
Mn: 0.3% to 2.0%,
Al: 0.01% to 0.15%,
N: 0.0005% to 0.008%,
P: 0.03% or less,
S: 0.01% or less,
O: 0.01% or less,
Nb: more than 0% and 2.5% or less,
H: 0.0010% or less,
Cu: 0% to 2.5%,
Ni: 0% to 2.5%,
Cr: 0% to 2.5%,
Mo: 0% to 2.0%,
V: 0% to 0.5%,
Ti: 0% to 0.5%,
W: 0% to 2.5%,
B: 0% to 0.005%,
Sn: 0% to 0.03%,
Sb: 0% to 0.3%,
Ca: 0% to 0.01%,

Mg: 0% to 0.01%, and
REM: 0% to 0.005%,
the remainder being Fe and incidental impurities,
wherein the number of Nb precipitates with an equivalent circular diameter of 2 nm or more and 100 nm or less is 10 pieces/$\mu m^2$ or more, and
a crack growth rate da/dN at a stress intensity factor of 20 MPa $\sqrt{m}$ in hydrogen of 1 MPa or more is 1.0 x $10^{-6}$ m·$cycle^{-1}$ or less.

[4] A method for producing a steel pipe, the method including:

a heating step of heating a slab with the chemical composition according to [3] at 1000°C to 1250°C;
a hot rolling step of rolling the slab heated in the heating step at a finish rolling delivery temperature of an $Ar_3$ temperature or higher;
a controlled cooling step of cooling a hot-rolled steel plate obtained in the hot rolling step under a condition in which an average cooling rate in the range of 1000°C to 400°C is 10°C/s or more in terms of a temperature at a plate thickness center and a cooling stop temperature ranges from 250°C to 650°C; any one of a pipe production step of bending the hot-rolled steel plate and butt-welding both end portions thereof after the controlled cooling step, and a pipe production step of forming the hot-rolled steel plate (sheet) into a cylindrical shape by cold roll forming and subjecting both circumferential end portions of the cylindrical shape to butt electric resistance welding after the controlled cooling step; and
a dehydrogenation treatment step of subjecting the steel pipe obtained in the pipe production step to dehydrogenation treatment (for removing hydrogen from steel materials).

Advantageous Effects of Invention

The present invention can provide a steel material and a steel pipe with a very good fatigue property in hydrogen in a high-pressure hydrogen gas environment and is industrially very useful.

Description of Embodiments

Next, a method for implementing the present invention is more specifically described. The following description shows preferred embodiments of the present invention, and the present invention is not limited by the following description. A steel material is more specifically described as a first embodiment, a UOE steel pipe as an example of a steel pipe according to the present invention is more specifically described as a second embodiment, and an electric-resistance-welded (ERW) steel pipe as an example of a steel pipe according to the present invention is more specifically described as a third embodiment.

First Embodiment

[Chemical Composition]

The reasons for limiting the chemical composition of a steel material according to the present invention are described below. Unless otherwise specified, "%" in the following description refers to "% by mass".

C: 0.02% to 0.15%

C is contained to ensure appropriate hardenability, but the effect is insufficient at less than 0.02%. Thus, the C content is 0.02% or more. The C content is preferably 0.03% or more. On the other hand, more than 0.15% results in a base material and a weld heat-affected zone with lower toughness and much lower weldability. Thus, the C content is 0.15% or less. The C content is preferably 0.12% or less. The C content is more preferably 0.10% or less, still more preferably 0.08% or less.

Si: 0.05% to 0.5%

Si is contained as a deoxidizer in steelmaking and as an element for ensuring hardenability, but the effects are insufficient at less than 0.05%. Thus, the Si content is 0.05% or more. The Si content is preferably 0.1% or more. The Si content is more preferably 0.15% or more. On the other hand, more than 0.5% results in an embrittled grain boundary, a decrease in the low-temperature toughness, and a degradation of the fatigue property in hydrogen. Thus, the Si content is 0.5% or less. The Si content is preferably 0.4% or less. The Si content is more preferably 0.3% or less, still more preferably 0.25% or less.

Mn: 0.3% to 2.0%

Mn is contained as an element for ensuring hardenability, but the effect is insufficient at less than 0.3%. Thus, the Mn content is 0.3% or more. The Mn content is preferably 0.4% or more. The Mn content is more preferably 0.5% or more. The Mn content is more preferably 0.6% or more. On the other hand, more than 2.0% results in a decrease in grain boundary strength and low-temperature toughness. Furthermore, the hardness of a surface layer portion or a center segregation zone increases during controlled cooling, and the fatigue property in hydrogen deteriorates. Thus, the Mn content is 2.0% or less. The Mn content is preferably 1.8% or less. The Mn content is more preferably 1.5% or less, still more preferably 1.3% or less.

Al: 0.01% to 0.15%

Al is contained as a deoxidizer and at the same time has an effect of pinning an austenite grain as a fine precipitate of an Al nitride during heating and suppressing coarsening of grains, but the effects are insufficient at less than 0.01%. Thus, the Al content is 0.01% or more. The Al content is preferably 0.02% or more. The Al content is more preferably 0.03% or more. On the other hand, a content of more than 0.15% results in a steel with lower cleanliness and toughness and a degradation of the fatigue property in hydrogen. Thus, the Al content is 0.15% or less. The Al content is preferably 0.12% or less. The Al content is more preferably 0.10% or less, still more preferably 0.08% or less.

N: 0.0005% to 0.008%

N is contained because N forms a fine precipitate by forming a nitride with Nb, Ti, Al, or the like and has an effect of pinning an austenite grain during heating, thereby suppressing coarsening of the grain and improving low-temperature toughness. The effect of refining the microstructure is insufficient at a content of less than 0.0005%. Thus, the N content is 0.0005% or more. The N content is preferably 0.001% or more. The N content is more preferably 0.0025% or more. On the other hand, a content of more than 0.008% results in an increase in the amount of solute N, a base material and a weld heat-affected zone with lower toughness, and a degradation of the fatigue property in hydrogen. Thus, the N content is 0.008% or less. The N content is preferably 0.007% or less. The N content is more preferably 0.006% or less, still more preferably 0.005% or less.

P: 0.03% or less

An impurity element P is likely to segregate at a grain boundary, and more than 0.03% results in lower bonding strength between adjacent crystal grains, a decrease in the low-temperature toughness, and a degradation of the fatigue property in hydrogen. Thus, the P content is 0.03% or less. The P content is preferably 0.02% or less, more preferably 0.01% or less. The lower limit is preferably, but not limited to, 0.001% or more due to an increase in cost.

S: 0.01% or less

An impurity element S is likely to segregate at a grain boundary and form a non-metallic inclusion MnS. More than 0.01% results in lower bonding strength between adjacent crystal grains, an increase in the amount of inclusion, a decrease in the low-temperature toughness, and a degradation of the fatigue property in hydrogen. Thus, the S content is 0.01% or less. The S content is preferably 0.008% or less. The S content is more preferably 0.005% or less, still more preferably 0.002% or less. The lower limit is preferably, but not limited to, 0.0001% or more due to an increase in cost. The S content is more preferably 0.001% or more.

O: 0.01% or less

O forms an oxide with Al or the like and affects the workability of the material, and a lower O content is better. A content of more than 0.01% results in an increase in the amount of inclusion and lower workability. Further, as the amount of inclusion increases, the fatigue property in hydrogen deteriorates. Thus, the O content is 0.01% or less. The O content is preferably 0.008% or less, more preferably 0.005% or less. The lower limit is preferably, but not limited to, 0.0001% or more due to an increase in cost. The O content is more preferably 0.001% or more.

Nb: more than 0% and 2.5% or less

Nb has an effect of improving the hardenability, pins an austenite grain as a fine precipitate of a Nb-based carbide/nitride/carbonitride during heating, and suppresses coarsening of the grain. The smaller the grain size, the greater the grain boundary area and the better the fatigue property in hydrogen. Thus, the Nb content is more than 0%. The Nb content is preferably 0.005% or more. The Nb content is more preferably 0.01% or more. On the other hand, a content of more than 2.5% results in a degradation of the toughness of a weld heat-affected zone. Thus, the Nb content is 2.5% or less. The Nb content is preferably 2.2% or less. The Nb content is more preferably 2.0% or less, most preferably 1.5% or less.

H: 0.0010% or less

H may be introduced into a steel material in various steps during production, and a large amount of H introduced increases the risk of cracking after solidification and accelerates fatigue crack growth. A large amount of H introduced also increases the crack growth rate, and it is therefore important to decrease the amount of hydrogen in the steel material. The effects do not cause a problem at 0.0010% or less, and the H content is therefore 0.0010% or less. The H content is preferably 0.0005% or less, more preferably 0.0002% or less. On the other hand, a H content of less than 0.00001% causes an increase in cost, and the H content is therefore preferably 0.00001% or more. The H content is more preferably 0.0001% or more. The amount of hydrogen is the amount of residual hydrogen after forming of a steel material, a steel pipe, UOE, or the like. In the present invention, the above H content can be achieved by performing the dehydrogenation treatment step.

In the present invention, the remainder of the chemical composition is preferably a steel composition composed of Fe and incidental impurities but, depending on the desired characteristics, it is preferable to further appropriately contain one or two or more of Cu: 0% to 2.5%, Ni: 0% to 2.5%, Cr: 0% to 2.5%, Mo: 0% to 2.0%, V: 0% to 0.5%, Ti: 0% to 0.5%, W: 0% to 2.5%, B: 0% to 0.005%, Sn: 0% to 0.03%, Sb: 0% to 0.3%, Ca: 0% to 0.01%, Mg: 0% to 0.01%, and REM: 0% to 0.005% individually or simultaneously.

Cu: 0% to 2.5%

Cu has an effect of improving the hardenability. Thus, when Cu is contained, the Cu content may be 0% or more, but the above effect is difficult to ensure at less than 0.05%, so that the Cu content is preferably 0.05% or more. A Cu content of more than 2.5% is likely to cause hot cracking during heating of a steel slab or during welding. Thus, when Cu is contained, the Cu content is 2.5% or less. The Cu content is preferably 2.3% or less. The Cu content is more preferably 2.0% or less, still more preferably 1.8% or less.

Ni: 0% to 2.5%

Ni has an effect of improving the hardenability similarly to Cu and further has an effect of improving the toughness. Thus, when Ni is contained, the Ni content may be 0% or more, but the above effect is difficult to ensure at less than 0.05%, so that the Ni content is preferably 0.05% or more. More than 2.5% results in low economic efficiency. Thus, when Ni is contained, the Ni content is 2.5% or less. The Ni content is preferably 2.3% or less. The Ni content is more preferably 2.0% or less, still more preferably 1.8% or less.

Cr: 0% to 2.5%

Cr is an element for ensuring hardenability, and when Cr is contained, the Cr content may be 0% or more, but the above effect is difficult to ensure at less than 0.1%, so that the Cr content is preferably 0.1% or more. On the other hand, a Cr content of more than 2.5% results in low weldability. Thus, when Cr is contained, the Cr content is 2.5% or less. The Cr content is preferably 2.3% or less. The Cr content is more preferably 2.0% or less, still more preferably 1.5% or less, most preferably 1.2% or less.

Mo: 0% to 2.0%

Mo has an effect of improving the hardenability, and when Mo is contained, the Mo content may be 0% or more, but the above effect is difficult to ensure at less than 0.05%, so that the Mo content is preferably 0.05% or more. On the other hand, a content of more than 2.0% results in low economic efficiency. Thus, when Mo is contained, the Mo content is 2.0% or less. The Mo content is preferably 1.8% or less. The Mo content is more preferably 1.5% or less, still more preferably 1.2% or less.

V: 0% to 0.5%

V has an effect of improving the hardenability, pins an austenite grain as a fine precipitate of a V-based carbide during heating, and suppresses coarsening of the grain. Thus, when V is contained, the V content may be 0% or more, but the above effect is difficult to ensure at less than 0.005%, so that the V content is preferably 0.005% or more. The V content is preferably 0.01% or more. On the other hand, a content of more than 0.5% results in a degradation of the toughness of a weld heat-affected zone. Thus, when V is contained, the V content is 0.5% or less. The V content is preferably 0.4% or less. The V content is more preferably 0.3% or less, still more preferably 0.2% or less.

Ti: 0% to 0.5%

Ti has an effect of improving the hardenability and has an effect of pinning an austenite grain as a fine precipitate of a Ti-based carbide/nitride/carbonitride during heating and suppressing the growth of the grain. Thus, when Ti is contained, the Ti content may be 0% or more, but the above effect is difficult to ensure at less than 0.005%, so that the Ti content is preferably 0.005% or more. On the other hand, a content of more than 0.5% results in a degradation of the toughness of a weld heat-affected zone. Thus, when Ti is contained, the Ti content is 0.5% or less. The Ti content is preferably 0.4% or less. The Ti content is more preferably 0.3% or less, still more preferably 0.2% or less.

W: 0% to 2.5%

W has an effect of improving the hardenability, and when W is contained, the W content may be 0% or more, but the above effect is difficult to ensure at less than 0.05%, so that the W content is preferably 0.05% or more. On the other hand, more than 2.5% results in low weldability. Thus, when W is contained, the W content is 2.5% or less. The W content is preferably 2.3% or less. The W content is more preferably 2.0% or less, still more preferably 1.8% or less.

B: 0% to 0.005%

B is contained as an element for ensuring hardenability, and when B is contained, the B content may be 0% or more, but the above effect is difficult to ensure at less than 0.0005%, so that the B content is preferably 0.0005% or more. On the other hand, more than 0.005% results in lower toughness. Thus, when B is contained, the B content is 0.005% or less. The B content is preferably 0.004% or less. The B content is more preferably 0.003% or less, still more preferably 0.002% or less.

Sn: 0% to 0.03%

Sn has an effect of increasing the corrosion resistance of a steel material. Thus, when Sn is contained, the Sn content may be 0% or more, but the above effect is difficult to ensure at less than 0.005%, so that the Sn content is preferably 0.005% or more. On the other hand, a content of more than 0.03% results in a decrease in high-temperature ductility and an increase in the possibility of cracking during casting. Thus, when Sn is contained, the Sn content is 0.03% or less. The Sn content is preferably 0.025% or less. The Sn content is more preferably 0.02% or less, still more preferably 0.015% or less.

Sb: 0% to 0.3%

Sb has an effect of increasing the corrosion resistance of a steel material. Thus, when Sb is contained, the Sb content may be 0% or more, but the above effect is difficult to ensure at less than 0.005%, so that the Sb content is preferably 0.005% or more. The Sb content is more preferably 0.01% or more. On the other hand, a content of more than 0.3% results in a decrease in high-temperature ductility and a decrease in hot rollability. Thus, when Sb is contained, the Sb content is 0.3% or less. The Sb content is preferably 0.25% or less. The Sb content is more preferably 0.2% or less, still more preferably 0.15% or less.

Ca: 0% to 0.01%

Ca forms CaS and has an effect of controlling the shape of a sulfide inclusion to CaS, which is a spherical inclusion less likely to be ductile by rolling, instead of MnS, which is an inclusion likely to be ductile by rolling. Thus, when Ca is contained, the Ca content may be 0% or more, but the above effect is difficult to ensure at less than 0.0005%, so that the Ca content is preferably 0.0005% or more. The Ca content is preferably 0.001% or more. On the other hand, a content of more than 0.01% results in lower cleanliness and a degradation of the material property, such as toughness. Thus, when Ca is contained, the Ca content is 0.01% or less. The Ca content is preferably 0.005% or less. The Ca content is more preferably 0.003% or less, still more preferably 0.002% or less.

Mg: 0% to 0.01%

Mg may be used as a pig iron desulfurization material. Thus, when Mg is contained, the Mg content may be 0% or more, but the above effect is difficult to ensure at less than 0.0005%, so that the Mg content is preferably 0.0005% or more. The Mg content is preferably 0.001% or more. On the other hand, a content of more than 0.01% results in lower cleanliness. Thus, when Mg is contained, the Mg content is 0.01% or less. The Mg content is preferably 0.005% or less. The Mg content is more preferably 0.004% or less, still more preferably 0.003% or less.

REM: 0% to 0.005%

REM forms a sulfide as REM(O, S) in steel, thereby reducing the amount of solute S at a grain boundary and improving SR cracking resistance characteristics. Thus, when REM is contained, the REM content may be 0% or more, but the above effect is difficult to ensure at less than 0.0005%, so that the REM content is preferably 0.0005% or more. On the other hand, a content of more than 0.005% results in significant accumulation of a REM sulfide in a sedimental zone and a deterioration of the material property. Thus, when REM is contained, the REM content is 0.005% or less. The REM content is preferably 0.003% or less. The REM content is more preferably 0.001% or less. REM is an abbreviation of Rare Earth Metal and refers to a rare-earth metal.

In the chemical composition of a steel plate and a steel pipe, the remainder other than the above components (elements) is composed of Fe and an incidental impurity element.

A metallic microstructure in the present invention is more specifically described.

Number of Nb precipitates with equivalent circular diameter of 2 nm or more and 100 nm or less: 10 pieces/$\mu m^2$ or more

The pinning effect of Nb can be confirmed by obtaining a predetermined number of precipitates. In the present invention, the number of Nb precipitates with an equivalent circular diameter in the range of 2 nm or more and 100 nm or less is 10 pieces/$\mu m^2$ or more. The number of Nb precipitates with an equivalent diameter in the range of 2 nm or more and 100 nm or less is preferably 15 pieces/$\mu m^2$ or more, more preferably 20 pieces/$\mu m^2$ or more, still more preferably 25 pieces/$\mu m^2$ or more. For the reason that an excessively large number of precipitates impair the hydrogen embrittlement property, preferable upper limit of the number of Nb precipitates with an equivalent circular diameter of 2 nm or more and 100 nm or less is 100 pieces/$\mu m^2$ or less, more preferably 90 pieces/$\mu m^2$ or less, still more preferably 80 pieces/$\mu m^2$ or less. For example, the Nb precipitates are NbC, NbN, a Nb carbonitride, or the like. For precipitation of fine Nb precipitates, the cooling stop temperature is important as described later. The reason for focusing on Nb precipitates of 2 nm or more is the difficulty of identification, and the reason for focusing on Nb precipitates of 100 nm or less is that excessively coarse Nb precipitates adversely affect hydrogen embrittlement.

Although a microstructure in the present invention is not particularly limited, the main microstructure has bainite, preferably 60% or more bainite, more preferably 80% or more bainite, still more preferably 90% or more. Bainite may be 100%.

Crack growth rate da/dN at stress intensity factor of 20 MPa $\sqrt{m}$ in hydrogen with pressure of 1 MPa or more: 1.0 x $10^{-6}$ m·cycle$^{-1}$ or less

The fatigue crack growth rate is an important parameter in the design of a gas container, such as a line pipe or a gas container, and is necessary to obtain a service life in which the safety of a destructive structural member is ensured. In a destructive structural member, it is difficult to eliminate cracks and crack initiation sites, and a crack occurs inevitably and propagates under repeated stress. Thus, it is important to control the crack growth rate of a steel material used for the destructive structural member also from the perspective of the service life. The crack growth rate is low when the stress applied to a crack tip is small, and increases as the stress to the crack tip increases. In a hydrogen environment, hydrogen enters a steel material and makes a crack more likely to propagate. The degree of acceleration of the crack growth rate by hydrogen is greatly affected by the microstructure and precipitates of the material. In a crack growth test in hydrogen at 1 MPa or more, when the crack growth rate da/dN at a stress intensity factor of 20 MPa $\sqrt{m}$ is 1.0 x $10^{-6}$ m·cycle$^{-1}$ or less determined in a fatigue test in accordance with ASTM E647 at a frequency of 1 Hz, a repetitive waveform of a sine wave, a control method of load control, and a stress ratio of R = 0.1, the service life of a steel structure in a high-pressure hydrogen environment can also be ensured. Thus, in a crack growth test in hydrogen at 1 MPa or more, the crack growth rate da/dN at a stress intensity factor of 20 MPa $\sqrt{m}$ is 1.0 x $10^{-6}$ m·cycle$^{-1}$ or less. The crack growth rate da/dN at a stress intensity factor of 20 MPa $\sqrt{m}$ is preferably 0.9 x $10^{-6}$ m·cycle$^{-1}$ or less, more preferably 0.8 x $10^{-6}$ m·cycle$^{-1}$ or less, still more preferably 0.7 x $10^{-6}$ m·cycle$^{-1}$ or less. Regarding the lower limit, beyond and closer to the atmospheric results can be considered to be better, and the crack growth rate da/dN at a stress intensity factor of 20 MPa $\sqrt{m}$ in the atmosphere is 0.05 x $10^{-6}$ m·cycle$^{-1}$, so that the crack growth rate da/dN at a stress intensity factor of 20 MPa $\sqrt{m}$ may be 0.05 x $10^{-6}$ m·cycle$^{-1}$ or more.

The plate thickness of a steel material is preferably, but not limited to, 4 mm or more. The plate thickness is more preferably 5 mm or more. The plate thickness is preferably 70 mm or less. The plate thickness is more preferably 30 mm or less.

A steel material with a good fatigue property in hydrogen gas according to the present invention may be any steel material that has the above chemical composition and metallic microstructure and that satisfies the crack growth rate in hydrogen.

A plate that is a steel material with a good fatigue property in hydrogen according to the present invention is described below as an example, and a method for producing the steel material with a good fatigue property in hydrogen according to the present invention is described below.

A steel material according to the present invention can be produced by sequentially performing a heating step, a hot rolling step, a controlled cooling step, and a dehydrogenation treatment step (for removing hydrogen from steel materials. Steel materials with a good fatigue property in hydrogen gas according to the present invention have the above chemical composition and include various types, such as a sheet (thin plate), a plate, and a steel pipe, with high fatigue crack growth resistance in hydrogen, or may be steel materials for a hydrogen pipeline formed into a predetermined shape.

In the following description of the production method, unless otherwise specified, the temperature at the thickness center of a steel raw material, a steel material, or a steel pipe is used. The temperature at the thickness center of a steel material or the like can be determined by calculating the temperature distribution in a cross section of the steel plate or the like by heat transfer analysis and correcting the result by the surface temperature of the steel plate or the like. The "hot-rolled steel plate" includes a hot-rolled plate/sheet and a hot-rolled steel strip.

In the present invention, a method for melting steel raw material (steel slab) is not particularly limited. For example, any known melting method using a converter, an electric arc furnace, a vacuum melting furnace, or the like is suitable. Any casting method may also be used. For example, a steel raw material with a desired size is produced by a known casting method, such as a continuous casting method. Instead of the continuous casting method, an ingot casting and blooming method may be applied without any problem. Molten steel may be further subjected to secondary refining, such as ladle refining.

Heating Step

Heating temperature: 1000°C or more and 1250°C or less

At a heating temperature of less than 1000°C, a material to be rolled has large deformation resistance and is difficult to be rolled. Thus, the heating temperature is 1000°C or more. The heating temperature is preferably 1050°C or more, more preferably 1100°C or more, still more preferably 1120°C or more. On the other hand, at a heating temperature of more than 1250°C, austenite grains are coarsened, fine austenite grains cannot be formed in the subsequent rolling (rough rolling, finish rolling), and the fatigue resistance in hydrogen decreases. Thus, the heating temperature in the hot rolling step is 1250°C or less. The heating temperature is preferably 1230°C or less. The heating temperature is more preferably 1210°C or less, still more preferably 1200°C or less.

In the present invention, after a steel slab (slab) is produced, the steel slab may be temporarily cooled to room temperature and then reheated by a known method. Alternatively, without being cooled to room temperature, a steel slab may be subjected without problems to an energy-saving process, such as hot direct rolling, in which a hot slab is conveyed directly into a furnace or is immediately rolled after slight heat retention.

Hot Rolling Step

The heating is followed by hot rolling including rough rolling and finish rolling, and the finish rolling is performed under the following conditions. The hot rolling is performed with a hot-rolling mill.

Finish rolling delivery temperature: $Ar_3$ temperature or higher

A finish rolling delivery temperature lower than the $Ar_3$ temperature results in a steel plate surface temperature equal to or lower than the ferrite transformation starting temperature during finish rolling, the formation of deformed ferrite with a high dislocation density, and a degradation of the fatigue property in hydrogen. Thus, the finish rolling delivery temperature is the $Ar_3$ temperature or higher. When the $Ar_3$ temperature is lower than 770°C, the finish rolling delivery temperature is preferably 770°C or more. When the $Ar_3$ temperature is higher than 770°C, the finish rolling delivery temperature is preferably the $Ar_3$ temperature + 30°C or more, more preferably the $Ar_3$ temperature + 50°C or more. On the other hand, although the finish rolling delivery temperature is not required to have any upper limit, when the $Ar_3$ temperature is lower than 850°C, a finish rolling delivery temperature of more than 850°C may result in insufficient rolling reduction in an austenite non-recrystallization temperature range, no formation of fine austenite grains, and a decrease in fatigue resistance in hydrogen. Thus, when the $Ar_3$ temperature is lower than 850°C, the finish rolling delivery temperature is preferably 850°C or less, more preferably 830°C or less. When the $Ar_3$ temperature is higher than 850°C, the finish rolling delivery temperature is preferably the $Ar_3$ temperature - 30°C or less, more preferably the $Ar_3$ temperature - 50°C or less.

In the present invention, the finished plate thickness (the plate thickness of a steel plate after finish rolling) is preferably 4 mm or more. On the other hand, although the upper limit of the finished plate thickness is not required, 70 mm or less is preferable from the perspective of temperature control of a steel plate.

The $Ar_3$ temperature varies depending on an alloy component of the steel and may therefore be determined by measuring the transformation temperature by experiment for each steel or can also be determined from the chemical composition using the following formula.

$$Ar_3 \ (°C) = 910 - 310C \ (\%) - 80Mn \ (\%) - 20Cu \ (\%) - 15Cr \ (\%) - 55Ni \ (\%) - 80Mo \ (\%)$$

Each alloying element indicates its content (% by mass).

Controlled Cooling Step

Average cooling rate at plate thickness center in range of 1000°C to 400°C: 10°C/s or more

An average cooling rate of less than 10°C/s at the plate thickness center results in a decrease in the nucleation frequency of ferrite and bainite, a coarsening thereof, and a degradation of the fatigue property in hydrogen. Thus, the average cooling rate at the plate thickness center in the range of 1000°C to 400°C is 10°C/s or more, preferably 12°C/s or more, more preferably 15°C/s or more, still more preferably 18°C/s or more. On the other hand, although the average cooling rate is not required to have any upper limit, when the average cooling rate is more than 60°C/s, a large amount of hard microstructure is formed on the surface of a steel plate, a steel microstructure with the microstructure intended in the present invention is not formed, and the fatigue property in hydrogen deteriorates. Thus, the average cooling rate at the plate thickness center is preferably 60°C/s or less. The average cooling rate at the plate thickness center is more preferably 55°C/s or less, still more preferably 50°C/s or less.

Cooling stop temperature at plate thickness center: 250°C or more and 650°C or less

When the cooling stop temperature at the plate thickness center is less than 250°C, the cooling stop temperature at the surface of the steel plate is too low, a large amount of hard microstructure is formed on the surface of the steel plate, a steel microstructure with the microstructure intended in the present invention cannot be formed, and the fatigue property in hydrogen deteriorates. Thus, the cooling stop temperature at the plate thickness center is 250°C or more, preferably 280°C or more, more preferably 300°C or more, still more preferably 390°C or more, most preferably 480°C or more. On the other hand, when the cooling stop temperature at the plate thickness center is more than 650°C, the nucleation frequency of ferrite or bainite decreases, these ferrite and bainite become coarse, a microstructure with the average grain size intended in the present invention cannot be formed, and the strength decreases, and coarsening of Nb precipitates proceeds due to residual heat. Thus, the cooling stop temperature at the plate thickness center is 650°C or less. The cooling stop temperature at the plate thickness center is preferably 620°C or less, more preferably 600°C or less, still more preferably 580°C or less, still most preferably 550°C or less, still more preferably 500°C or less.

In the case of producing a steel sheet, it is necessary to coil the steel sheet after the cooling is stopped, and the temperature at which the steel sheet is coiled after the cooling is stopped is important for the same reason as described above. The coiling temperature is 650°C or less, preferably 620°C or less, more preferably 600°C or less, still more preferably 580°C or less, most preferably 550°C or less, still more preferably 500°C or less. On the other hand, when the coiling temperature is too low, coiling becomes difficult, and a steel microstructure with the intended microstructure cannot be formed, so that the coiling temperature is 250°C or more, preferably 280°C or more, more preferably 300°C or more, still more preferably 390°C or more, most preferably 480°C or more.

Although the cooling stop temperature at the surface of a steel plate is not particularly limited, at less than 250°C a large amount of hard microstructure is formed on the surface of the steel plate, a steel microstructure with the microstructure fraction intended in the present invention is not formed, and the fatigue resistance in hydrogen deteriorates. Thus, the cooling stop temperature at the surface of a steel plate is preferably 250°C or more. The cooling stop temperature at the surface of a steel plate is more preferably 280°C or more. On the other hand, when the cooling stop temperature is more than 650°C, the cooling stop temperature at the middle of the plate thickness is too high, the nucleation frequency of ferrite or bainite at the middle of the plate thickness decreases, these ferrite and bainite become coarse, a microstructure with the average grain size intended in the present invention cannot be formed, and the strength decreases. Thus, the cooling stop temperature of the plate surface is preferably 650°C or less. The cooling stop temperature at the surface of the steel plate is more preferably 470°C or less.

In the present invention, unless otherwise specified, the average cooling rate is a value (cooling rate) determined by ((temperature at plate thickness center of steel plate before cooling - temperature at plate thickness center of hot-rolled steel plate after cooling)/cooling time).

The cooling method may be water cooling, such as injection of water from a nozzle, cooling by injection of a coolant gas, or the like. In the present invention, a cooling operation (treatment) is preferably performed on both sides of the steel plate so that both sides of the steel plate are cooled under the same conditions.

Dehydrogenation Treatment Step

Hydrogen originally present in a steel material increases the acceleration of fatigue crack growth and decreases the fatigue life and the fatigue crack growth rate in hydrogen. Thus, it is necessary to perform dehydrogenation treatment to release hydrogen remaining after production. In the dehydrogenation treatment, holding a product at a high temperature for a certain period before use can decrease the amount of hydrogen in the steel, and a steel plate with a good fatigue property in hydrogen in a high-pressure hydrogen gas environment can be produced. The holding time R (s) is preferably determined from the plate thickness or wall thickness t (mm) of a steel material or a steel pipe and the hydrogen diffusion coefficient D (mm·s$^{-1}$) in the steel at room temperature using the following formula (A) .

$$R \geq t^2/D \qquad (A)$$

The hydrogen diffusion coefficient varies depending on a component contained and the metallic microstructure and a value within a range from, for example, 1 x 10$^{-5}$ to 5 x 10$^{-3}$ mm$^2$/s, more preferably 5 x 10$^{-4}$ mm$^2$/s or less, may be adopted. The dehydrogenation treatment step is performed before pipe production or welding for connecting steel pipes. The dehydrogenation treatment (for removing hydrogen from steel materials) is preferably performed at a high temperature because the hydrogen diffusion coefficient D at a high temperature is small and hydrogen is released quickly. At a high temperature, the calculation may be performed using a diffusion coefficient D' (diffusion coefficient at corresponding temperature) at the holding temperature for the value of D in the formula (A). On the other hand, an excessively high temperature T in the dehydrogenation step results in a significant decrease in the material strength, and the dehydrogenation treatment temperature is preferably 550°C or less. The dehydrogenation treatment temperature T is more preferably 500°C or less. The dehydrogenation treatment temperature T is still more preferably 400°C or less, most preferably 300°C or less. Furthermore, the dehydrogenation treatment temperature T is preferably room temperature or higher for the reason that the dehydrogenation treatment at a temperature lower than room temperature increases the treatment time and cost. The dehydrogenation treatment temperature T is more preferably 50°C or more. The dehydrogenation treatment temperature T is still more preferably 100°C or more, most preferably 150°C or more. The dehydrogenation treatment temperature T herein is the temperature of the atmosph dehydrogenation treatment ere in the dehydrogenation treatment step. The room temperature refers to 20°C $\pm$ 10°C.

In particular, heating, if conducted, takes time for the temperature Tc at the thickness center of a steel material or a steel pipe to reach the temperature of the atmosphere in the dehydrogenation treatment step (dehydrogenation treatment temperature T), so even if the holding time R (s) is satisfied at the ambient temperature, the dehydrogenation treatment may be insufficient if the dehydrogenation treatment temperature T (ambient temperature) has not been reached at the thickness center. Thus, it is preferable to hold for the holding time R (s) or more after the temperature Tc at the thickness center reaches the target dehydrogenation treatment temperature T. Furthermore, to achieve a predetermined crack growth rate in hydrogen gas, it is necessary to appropriately adjust the amount of hydrogen in a steel material in a surface layer portion and at the thickness center, and for this purpose, it is preferable to hold the steel material at the dehydrogenation treatment temperature T for R (s) or more defined by the formula (A), and it is further preferable to hold the steel material for the holding time R (s) or more after the temperature Tc at the thickness center reaches the target dehydrogenation treatment temperature T. In other words, at least the former can appropriately control the amount of hydrogen in the steel material in the surface layer portion of the steel material or the steel pipe, and when the latter is also performed, the amount of hydrogen in the steel material from the surface layer portion to the thickness center of the steel material or the steel pipe can be appropriately controlled. The temperature Tc at the thickness center may be actually measured with a thermocouple or the like or may be predicted using a finite element method or the like.

The time and temperature in the dehydrogenation treatment step may include the temperature and time applied at the time of heating in the pipe production step of an electric-resistance-welded pipe, UOE, or the like, as described later. Furthermore, the scale on the steel surface inhibits dehydrogenation and is therefore preferably removed before dehydrogenation treatment. The removal method may be, for example, but is not limited to, physical cleaning by high-pressure cleaning or a chemical method using a scale remover. If the scale is removed by approximately 100 $\mu$m in thickness, the effects of scale removal can be obtained.

Second Embodiment

A UOE steel pipe as an example of a steel pipe according to the present invention is more specifically described below. The chemical composition, the metallic microstructure, and the crack growth rate of a steel pipe are the same as those described for the steel material, and the heating step, the hot rolling step, the controlled cooling step, and the dehydrogenation treatment step in the production method are performed in the same manner as described for the steel material. The pipe production step is performed as described below.

Pipe Production Step

A UOE steel pipe in the present invention is produced by bending a hot-rolled steel plate, more specifically, conducting weld preparation to an end portion of the hot-rolled steel plate, forming the steel plate into a steel pipe shape by C-press, U-press, or O-press, seam-welding a butt joint by inner surface welding and outer surface welding, and if necessary performing an expansion step. The welding method may be any method that can achieve sufficient joint strength and joint toughness and, from the perspective of good weld quality and production efficiency, submerged arc welding is preferably used. Furthermore, a steel pipe produced by press bending into a pipe shape and then seam-welding a butt joint can also be subjected to expansion. The welding method may be, but is not limited to, submerged arc welding or the like. A UOE steel pipe as an example of a steel pipe according to the present invention preferably has a plate thickness of 10 mm or more and 50 mm or less.

Third Embodiment

An electric-resistance-welded steel pipe as an example of a steel pipe according to the present invention is described below. The chemical composition, the metallic microstructure, and the crack growth rate of an electric-resistance-welded steel pipe are the same as those described for the steel material, and the heating step, the hot rolling step, and the dehydrogenation treatment step in the production method are performed in the same manner as described for the steel material. The controlled cooling step and the pipe production step after the hot rolling are performed as described below.

Controlled Cooling Step

Average cooling rate at plate (sheet) thickness center in range of 1000°C to 400°C: 10°C/s or more
An average cooling rate of less than 10°C/s in the range of 1000°C to 400°C at the plate thickness center results in a decrease in the nucleation frequency of ferrite and bainite, coarsening thereof, and a degradation of the fatigue property in hydrogen. Thus, the average cooling rate at the plate thickness center in the range of 1000°C to 400°C is 10°C/s or more, preferably 12°C/s or more, more preferably 15°C/s or more, still more preferably 18°C/s or more. On the other hand, although the average cooling rate is not required to have any upper limit, when the average cooling rate is more than 60°C/s, a large amount of hard microstructure is formed on the surface of a steel plate, a steel microstructure with the microstructure intended in the present invention is not formed, and the fatigue property in hydrogen deteriorates. Thus, the average cooling rate at the plate thickness center is preferably 60°C/s or less. The average cooling rate at the plate thickness center is more preferably 55°C/s or less, still more preferably 50°C/s or less.

Cooling stop temperature at plate (sheet) thickness center: 250°C or more and 650°C or less

When the cooling stop temperature at the plate thickness center is less than 250°C, the cooling stop temperature at the surface of the steel plate is too low, a large amount of hard microstructure is formed on the surface of the steel plate, a steel microstructure with the microstructure intended in the present invention cannot be formed, and the fatigue property in hydrogen deteriorates. Thus, the cooling stop temperature at the plate thickness center is 250°C or more, preferably 280°C or more, more preferably 300°C or more. The cooling stop temperature at the plate thickness center is still more preferably 390°C or more. To reliably suppress the formation of a hard microstructure on the surface of the steel plate, the cooling stop temperature at the plate thickness center is most preferably 450°C or more, still more preferably 480°C or more. On the other hand, when the cooling stop temperature is more than 650°C, the nucleation frequency of ferrite or bainite decreases, these ferrite and bainite become coarse, a microstructure with the average grain size intended in the present invention cannot be formed, and the strength decreases. Furthermore, Nb precipitates are coarsened due to residual heat. Thus, the cooling stop temperature at the plate thickness center is 650°C or less, preferably 620°C or less, more preferably 600°C or less, still more preferably 580°C or less, most preferably 550°C or less, still more preferably 500°C or less.
The hot-rolled steel plate (sheet) is then coiled. The coiling temperature is preferably 650°C or less.

Although the cooling stop temperature at the surface of a steel plate is not particularly limited, at less than 250°C a large amount of hard microstructure is formed on the surface of the steel plate, a steel microstructure with the microstructure intended in the present invention is not formed, and the fatigue property in hydrogen deteriorates. On the other hand, when the cooling stop temperature at the surface of the steel plate is more than 650°C, the cooling stop temperature at the middle of the plate thickness is too high, the nucleation frequency of ferrite or bainite at the middle of the plate thickness decreases, these ferrite and bainite become coarse, a microstructure including the microstructure intended in the present invention cannot be formed, and the strength decreases. The cooling stop temperature at the surface of the steel plate is preferably 280°C or more and is preferably 470°C or less.

In the present invention, unless otherwise specified, the average cooling rate is a value (cooling rate) determined by ((temperature at plate thickness center of hot-rolled steel plate before cooling - temperature at plate thickness center of hot-rolled steel plate after cooling)/cooling time).

The cooling method may be water cooling, such as injection of water from a nozzle, cooling by injection of a coolant gas, or the like. In the present invention, a cooling operation (treatment) is preferably performed on both sides of the steel plate so that both sides of the steel plate are cooled under the same conditions.

Pipe Production Step

An electric-resistance-welded steel pipe as an example of a steel pipe according to the present invention is produced by forming the hot-rolled steel plate (sheet) into a cylindrical shape by cold roll forming and butt-welding both circumferential end portions of the cylindrical shape (pipe production step). An electric-resistance-welded steel pipe may also be produced further by forming an raw electric-resistance-welded steel pipe using a sizing roll satisfying the following formula (1) (a sizing step) and applying an internal pressure p (MPa) satisfying the following formula (2) to the inner surface of the raw electric-resistance-welded steel pipe (an internal pressure applying step). The term "cylindrical shape" means that the cross section of the pipe has a "C" shape.

Diameter (mm) of sizing roll $\geq$ Thickness (mm) of hot-rolled steel plate/0.020         (1)

$$X < p \leq X \times 1.5 \quad (2)$$

X = (wall thickness (mm) of raw electric-resistance-welded steel pipe/radius (mm) of raw electric-resistance-welded steel pipe) x yield strength (MPa) of raw electric-resistance-welded steel pipe

The internal pressure can be applied, for example, by sealing a pipe end with a packing made of a rubber material and applying water pressure to the inside of the pipe. To stabilize the shape, if necessary, a die with a desired diameter may be used as an outer frame.

An electric-resistance-welded steel pipe as an example of a steel pipe according to the present invention preferably has a thickness of 5 mm or more and preferably has a thickness of 30 mm or less.

In the sizing step, passage through rolls causes bending deformation along the roll shape in the pipe axis direction and generates residual stress in the pipe axis direction. The absolute value of the residual stress in the pipe axis direction increases with the bending strain in the bending deformation. The bending strain increases as the diameter of the sizing roll decreases and as the thickness of the hot-rolled steel plate (sheet) increases.

Thus, in the present invention, from the perspective of reducing the shear residual stress, the diameter of the sizing roll satisfies the formula (1) to reduce the absolute value of the residual stress in the pipe axis direction. When the sizing roll has a diameter smaller than the right side of the formula (1), the shear residual stress intended in the present invention cannot be obtained. Although the diameter of the sizing roll is not required to have any upper limit, the load on the facilities increases with the sizing roll, and the sizing roll therefore preferably has a diameter of 2000 mm or less.

In the internal pressure applying step, the raw electric-resistance-welded steel pipe is expanded to generate tensile stress in the circumferential direction of the pipe and reduce the absolute value of residual stress in the circumferential direction of the pipe. As the internal pressure p (MPa) in the internal pressure applying step increases, the absolute value of the residual stress in the circumferential direction of the pipe decreases. The tensile stress generated in the circumferential direction of the pipe increases as the radius of the steel pipe increases and as the wall thickness of the steel pipe decreases.

The left side (X) of the formula (2) corresponds to the internal pressure p when the tensile stress generated in the circumferential direction of the pipe is equal to the yield stress of the raw electric-resistance-welded steel pipe.

In the present invention, from the perspective of reducing the shear residual stress, to reduce the absolute value of the residual stress in the pipe axis direction, the internal pressure p is larger than the left side (X) of the formula (2) to expand the raw electric-resistance-welded steel pipe to the plastic region. On the other hand, when the internal pressure p exceeds the right side (X x 1.5) of the formula (2), the absolute value of the residual stress in the circumferential direction of the pipe decreases, but the amount of work hardening due to expansion increases excessively, the dislocation density on the pipe surface increases, and the fatigue property in hydrogen deteriorates.

Under the above conditions, a steel material and a steel pipe with a good fatigue property in hydrogen satisfying a predetermined crack growth rate in hydrogen can be produced.

EXAMPLE 1

Examples in which the advantages of the present invention have been verified are described below. In the following examples, steel materials and steel pipes were produced under the following production conditions and were characterized. Steels with the chemical compositions shown in Tables 1-1 and 1-2 were melted and cast into slabs, and steel materials Nos. 1 to 71 and 80 were all heated to 1200°C, were then hot-rolled under conditions such that the finish rolling temperature was 950°C or more, and were cooled by water cooling to the cooling stop temperatures shown in Tables 1-1 and 1-2 (accelerated cooling) to produce steel materials, and the steel pipes Nos. 2 to 71 and 80 were also formed using the steel materials. For Nos. 2 to 15, 33 to 44, 63 to 70, and 80, steel pipes were formed by the pipe production step of bending each steel material (hot-rolled steel plate) and butt-welding both end portions thereof, and for Nos. 16 to 32, 45 to 62, and 71, steel pipes were formed by the pipe production step of forming each steel material (hot-rolled steel plate (sheet)) into a cylindrical shape by cold roll forming and subjecting both circumferential end portions of the cylindrical shape to butt electric resistance welding. The average cooling rate during cooling was in the range of 12°C/s ± 2°C/s. The temperature of each steel material was measured with a thermocouple inserted into the middle of the plate thickness. Furthermore, the steel materials Nos. 1 to 31 and 33 to 80 and the steel pipes Nos. 2 to 31 and 33 to 80 were allowed to stand at room temperature for 96 hours (h) or more to perform dehydrogenation treatment before the steel materials and the steel pipes were evaluated. Room temperature refers to 20°C ± 10°C. The steel material No. 32 was not subjected to the dehydrogenation treatment. The steel materials Nos. 70 and 71 and the steel pipes Nos. 70 and 71 could not be welded, could not be used as steel pipes, and therefore could not be evaluated.

For the steel materials Nos. 72 to 79, slabs with the same chemical composition as the steel material No. 58 were used, and production conditions were also examined. Regarding conditions that are not described, the production was performed under the same conditions as the steel materials Nos. 1 to 71. For the steel material No. 72, the heating temperature is 1300°C, which exceeds the upper limit of the invention. For the steel material No. 73, the finish rolling temperature was 700°C, which is lower than the lower limit of the invention. For the steel material No. 74, the finish rolling temperature is 900°C, which is within the scope of the invention. For the steel material No. 75, the average cooling rate after rolling is 9°C/s, which is outside the scope of the invention. For the steel material No. 76, the average cooling rate after rolling is 65°C/s, which is within the scope of the invention. For the steel material No. 77, when the heating temperature was 950°C, the slab was hard and could not be rolled, and the evaluation was not performed. For the steel material No. 78, the cooling stop temperature is 700°C, which is outside the scope of the present invention. For the steel material No. 79, the cooling stop temperature is 240°C, which is outside the scope of the present invention. Also for the steel materials Nos. 72 to 79, steel pipes were produced by the pipe production step of forming each steel material into a cylindrical shape by cold roll forming and subjecting both circumferential end portions of the cylindrical shape to butt electric resistance welding.

The fatigue crack propagation characteristics were evaluated by a fatigue crack growth test. A compact tension (CT) test specimen (a test specimen close to a square with a notch at one end portion) according to ASTM E 647 was taken from each steel material so that the load applying direction was parallel to the rolling direction, the length of a fatigue crack was measured by a compliance method using a clip gauge to determine the fatigue crack propagation rate in 5-MPa high-pressure hydrogen gas. A test specimen taken from a plate (sheet) with thickness of 10 mm or less was ground from the surface by 0.5 mm resulting in test specimen thickness of 2 mm, 5 mm, 8 mm, or 9 mm, respectively, and for a test specimen taken from a plate (sheet) with thickness other than them, a test specimen with a thickness of 10 mm was taken from a position of t/2 (t: plate thickness). Further, the front and back sides of a crack growth portion were mirror-polished. At this time, the fatigue crack growth rate (m/cycle) in a stress intensity factor range $\Delta K = 20$ (MPa·m$^{1/2}$) as a stable growth region where the Paris law holds was evaluated as a representative value. Table 1 shows the results. A level at which a crack growth rate da/dN of $1.0 \times 10^{-6}$ m·cycle$^{-1}$ or less was achieved was judged to be acceptable.

Nb precipitates were evaluated by the following method. Square bars taken from three places per sample at random from each sample were mirror-finished by machining and were then etched. Although the size was not particularly specified, the surface area was unified to 10 cm$^2$ or less. Pretreatment was performed by an extraction replica method in which precipitates were transferred to a replica film formed by carbon vapor deposition and were observed, and Nb precipitates were observed and analyzed by EPMA. In Tables 1-1 and 1-2, Y indicates observation of 10 pieces/$\mu$m$^2$ or more of Nb precipitates of 2 nm or more and 100 nm or less, and N indicates observation of less than 10 pieces/$\mu$m$^2$.

The steel pipes in Tables 1-1, 1-2, and 2 also showed the same results as the steel materials.

The examples of the present invention all satisfied the condition that the crack growth rate da/dN in hydrogen gas was 1.0 x 10$^{-6}$ m/cycle or less.

[Table 1-1]

| Steel material No. | Steel pipe No. | C | Si | Mn | Al | N | P | S | O | Nb | H | Cu | Ni | Cr | Mo | V | Ti | W | B | Sn | Sb | Ca | Mg | REM | Ar3 temperature (°C) | Cooling stop temperature (°C) | Nb carbide | Crack growth rate in hydrogen at ΔK=20 (MPa·m$^{1/2}$) 10$^{-6}$ m/cycle | Notes |
|---|---|---|---|---|---|---|---|---|---|---|---|---|---|---|---|---|---|---|---|---|---|---|---|---|---|---|---|---|---|
| 1 | - | 0.02 | 0.26 | 0.85 | 0.13 | 0.0025 | 0.029 | 0.008 | 0.002 | 1.000 | 0.0003 | | | | | | | | | | | | | | 836 | 340 | Y | 0.294 | Inventive example |
| 2 | 2 | 0.02 | 0.28 | 1.00 | 0.15 | 0.0010 | 0.022 | 0.015 | 0.002 | 1.500 | 0.0006 | | | | | | | | | | | | | | 824 | 410 | Y | 1.669 | Comparative example |
| 3 | 3 | 0.03 | 0.19 | 0.57 | 0.01 | 0.0077 | 0.022 | 0.005 | 0.003 | 0.000 | 0.0001 | | | | | | | | | | | | | | 855 | 430 | N | 1.089 | Comparative example |
| 4 | 4 | 0.03 | 0.35 | 1.89 | 0.02 | 0.0005 | 0.025 | 0.004 | 0.003 | 0.900 | 0.0008 | | | | | | | | | | | | | | 750 | 310 | Y | 0.432 | Inventive example |
| 5 | 5 | 0.03 | 0.40 | 0.85 | 0.10 | 0.0068 | 0.008 | 0.006 | | 1.700 | 0.0004 | | | | | | | | | | | | | | 833 | 370 | Y | 0.541 | Inventive example |
| 6 | 6 | 0.04 | 0.16 | 1.02 | 0.15 | 0.0024 | 0.017 | 0.009 | 0.006 | 2.000 | 0.0002 | | | | | | | | | | | | | | 816 | 250 | Y | 0.959 | Inventive example |
| 7 | 7 | 0.04 | 0.40 | 0.61 | 0.07 | 0.0073 | 0.001 | 0.008 | 0.010 | 0.200 | 0.0008 | | | | | | | | | | | | | | 849 | 390 | Y | 0.032 | Inventive example |
| 8 | 8 | 0.05 | 0.09 | 1.17 | 0.15 | 0.0033 | 0.026 | 0.002 | 0.010 | 1.300 | 0.0004 | | | | | | | | | | | | | | 801 | 350 | Y | 0.247 | Inventive example |
| 9 | 9 | 0.06 | 0.15 | 2.10 | 0.12 | 0.0049 | 0.007 | 0.009 | 0.004 | 2.300 | 0.0003 | | | | | | | | | | | | | | 723 | 300 | Y | 1.865 | Comparative example |
| 10 | 10 | 0.06 | 0.24 | 0.42 | 0.05 | 0.0044 | 0.024 | 0.008 | 0.010 | 1.100 | 0.0010 | | | | | | | | | | | | | | 858 | 420 | Y | 0.771 | Inventive example |
| 11 | 11 | 0.08 | 0.14 | 1.40 | 0.04 | 0.0023 | 0.035 | 0.002 | 0.004 | 0.800 | 0.0009 | | | | | | | | | | | | | | 773 | 330 | Y | 1.246 | Comparative example |
| 12 | 12 | 0.08 | 0.37 | 0.85 | 0.10 | 0.0051 | 0.002 | 0.007 | 0.003 | 1.800 | 0.0005 | | | | | | | | | | | | | | 817 | 340 | Y | 0.788 | Inventive example |
| 13 | 13 | 0.08 | 0.40 | 1.47 | 0.11 | 0.0090 | 0.019 | 0.002 | 0.010 | 1.300 | 0.0006 | | | | | | | | | | | | | | 768 | 410 | Y | 1.189 | Comparative example |
| 14 | 14 | 0.09 | 0.19 | 1.25 | 0.02 | 0.0043 | 0.029 | 0.005 | 0.007 | 1.200 | 0.0001 | | | | | | | | | | | | | | 782 | 430 | Y | 0.142 | Inventive example |
| 15 | 15 | 0.09 | 0.50 | 1.00 | 0.14 | 0.0043 | 0.022 | 0.005 | 0.004 | 0.400 | 0.0002 | | | | | | | | | | | | | | 802 | 310 | Y | 0.158 | Inventive example |
| 16 | 16 | 0.09 | 0.60 | 1.00 | 0.15 | 0.0016 | 0.017 | 0.009 | 0.002 | 0.800 | 0.0008 | | | | | | | | | | | | | | 802 | 370 | Y | 1.555 | Comparative example |
| 17 | 17 | 0.11 | 0.18 | 1.05 | 0.15 | 0.0019 | 0.026 | 0.006 | 0.008 | 0.005 | 0.0009 | | | | | | | | | | | | | | 792 | 250 | Y | 0.750 | Inventive example |
| 18 | 18 | 0.11 | 0.24 | 0.78 | 0.09 | 0.0060 | 0.014 | 0.001 | 0.001 | 1.400 | 0.0008 | | | | | | | | | | | | | | 814 | 390 | Y | 0.120 | Inventive example |
| 19 | 19 | 0.11 | 0.27 | 1.20 | 0.10 | 0.0080 | 0.017 | 0.005 | 0.006 | 1.600 | 0.0008 | | | | | | | | | | | | | | 780 | 350 | Y | 0.412 | Inventive example |
| 20 | 20 | 0.11 | 0.31 | 0.30 | 0.10 | 0.0062 | 0.014 | 0.004 | 0.010 | 0.300 | 0.0003 | | | | | | | | | | | | | | 852 | 310 | Y | 0.555 | Inventive example |
| 21 | 21 | 0.11 | 0.43 | 0.77 | 0.14 | 0.0006 | 0.024 | 0.005 | 0.010 | 1.700 | 0.0006 | | | | | | | | | | | | | | 814 | 320 | Y | 0.635 | Inventive example |
| 22 | 22 | 0.12 | 0.15 | 1.82 | 0.06 | 0.0048 | 0.014 | 0.008 | 0.010 | 2.100 | 0.0008 | | | | | | | | | | | | | | 727 | 420 | Y | 0.134 | Inventive example |
| 23 | 23 | 0.12 | 0.30 | 0.58 | 0.16 | 0.0043 | 0.026 | 0.008 | 0.003 | 1.200 | 0.0005 | | | | | | | | | | | | | | 826 | 390 | Y | 1.283 | Comparative example |
| 24 | 24 | 0.12 | 0.30 | 1.64 | 0.08 | 0.0052 | 0.018 | 0.001 | 0.009 | 0.600 | 0.0003 | | | | | | | | | | | | | | 742 | 400 | Y | 0.393 | Inventive example |
| 25 | 25 | 0.13 | 0.19 | 2.00 | 0.04 | 0.0072 | 0.007 | 0.004 | 0.006 | 0.700 | 0.0006 | | | | | | | | | | | | | | 710 | 310 | Y | 0.104 | Inventive example |
| 26 | 26 | 0.13 | 0.48 | 1.15 | 0.12 | 0.0059 | 0.022 | 0.004 | 0.009 | 1.500 | 0.0008 | | | | | | | | | | | | | | 778 | 320 | Y | 0.348 | Inventive example |
| 27 | 27 | 0.14 | 0.28 | 1.67 | 0.14 | 0.0053 | 0.006 | 0.009 | 0.006 | 2.200 | 0.0008 | | | | | | | | | | | | | | 733 | 420 | Y | 0.301 | Inventive example |
| 28 | 28 | 0.14 | 0.35 | 1.99 | 0.13 | 0.0023 | 0.007 | 0.001 | 0.002 | 1.900 | 0.0001 | | | | | | | | | | | | | | 707 | 390 | Y | 0.385 | Inventive example |
| 29 | 29 | 0.14 | 0.43 | 1.17 | 0.10 | 0.0058 | 0.026 | 0.002 | 0.015 | 0.500 | 0.0008 | | | | | | | | | | | | | | 773 | 400 | Y | 1.792 | Comparative example |
| 30 | 30 | 0.15 | 0.05 | 0.57 | 0.15 | 0.0017 | 0.028 | 0.008 | 0.010 | 1.100 | 0.0002 | | | | | | | | | | | | | | 818 | 420 | Y | 0.147 | Inventive example |
| 31 | 31 | 0.15 | 0.44 | 2.00 | 0.05 | 0.0012 | 0.014 | 0.009 | 0.007 | 2.000 | 0.0009 | | | | | | | | | | | | | | 704 | 330 | Y | 0.280 | Inventive example |
| 32 | 32 | 0.15 | 0.08 | 1.59 | 0.10 | 0.0045 | 0.009 | 0.008 | 0.004 | 1.000 | 0.0020 | | | | | | | | | | | | | | 736 | 340 | Y | 1.325 | Comparative example |
| 33 | 33 | 0.02 | 0.22 | 1.65 | 0.05 | 0.0025 | 0.015 | 0.008 | 0.009 | 0.090 | 0.0006 | 0.01 | 2.23 | 1.47 | 1.41 | 0.16 | 0.076 | 2.34 | 0.0050 | | 0.09 | 0.007 | 0.010 | | 514 | 410 | Y | 0.134 | Inventive example |
| 34 | 34 | 0.02 | 0.26 | 0.77 | 0.13 | 0.0008 | 0.026 | 0.009 | 0.002 | 0.040 | 0.0008 | | 0.71 | | | 0.45 | | 0.31 | | 0.22 | 0.005 | 0.010 | | | 832 | 430 | Y | 0.161 | Inventive example |
| 35 | 35 | 0.02 | 0.27 | 0.47 | 0.07 | 0.0079 | 0.022 | 0.003 | 0.005 | 2.500 | 0.0009 | 1.94 | 0.54 | 1.37 | 0.38 | 0.50 | 0.033 | 2.14 | | 0.010 | | | 0.010 | | 747 | 310 | Y | 0.075 | Inventive example |
| 36 | 36 | 0.03 | 0.31 | 1.88 | 0.06 | 0.0050 | 0.022 | 0.003 | 0.005 | 0.040 | 0.0005 | 1.53 | 0.51 | 1.10 | 0.88 | 0.48 | 0.082 | 2.27 | | 0.020 | | 0.005 | | | 605 | 370 | Y | 0.247 | Inventive example |
| 37 | 37 | 0.04 | 0.23 | 1.41 | 0.02 | 0.0066 | 0.014 | 0.001 | 0.003 | 0.050 | 0.0006 | 1.47 | | | 1.71 | 0.09 | 0.093 | 2.00 | | 0.020 | 0.26 | 0.009 | 0.010 | 0.0050 | 567 | 250 | Y | 0.272 | Inventive example |
| 38 | 38 | 0.04 | 0.26 | 1.94 | 0.13 | 0.0044 | 0.025 | 0.003 | 0.003 | 0.090 | 0.0002 | 1.13 | 1.77 | 0.14 | 1.70 | 0.02 | 0.500 | | | | 0.10 | 0.010 | | | 484 | 390 | Y | 0.704 | Inventive example |
| 39 | 39 | 0.04 | 0.60 | 1.88 | 0.02 | 0.0027 | 0.017 | 0.005 | 0.005 | 2.500 | 0.0008 | 2.30 | 1.58 | 1.91 | 1.22 | 0.25 | 0.098 | 0.45 | | 0.010 | 0.15 | 0.007 | | | 488 | 320 | Y | 1.467 | Comparative example |
| 40 | 40 | 0.05 | 0.08 | 0.65 | 0.03 | 0.0014 | 0.028 | 0.015 | 0.005 | 0.100 | 0.0001 | 0.39 | 1.25 | 0.75 | 1.78 | 0.34 | 0.015 | 0.59 | | | 0.06 | 0.003 | 0.010 | | 612 | 420 | Y | 1.594 | Comparative example |

1 The remainder is composed of Fe and incidental impurities
Blank: no particularly intended addition
Underline: outside the scope of the present invention

[Table 1-2]

| Steel material No. | Steel pipe No. | C | Si | Mn | Al | N | P | S | O | Nb | H | Cu | Ni | Cr | Mo | V | Ti | W | B | Sn | Sb | Ca | Mg | REM | Ar3 temperature (°C) | Cooling stop temperature (°C) | Nb carbide | Crack growth rate in hydrogen at ΔK=20 (MPa·m$^{1/2}$) 10$^{-6}$ m/cycle | Notes |
|---|---|---|---|---|---|---|---|---|---|---|---|---|---|---|---|---|---|---|---|---|---|---|---|---|---|---|---|---|---|
| 41 | 41 | 0.05 | 0.44 | 0.69 | 0.11 | 0.0072 | 0.012 | 0.002 | 0.005 | 0.030 | 0.0008 | 2.50 | 1.49 | 1.95 | 1.74 | 0.16 | 0.010 | 1.22 | | | | | | | 539 | 350 | Y | 0.626 | Inventive example |
| 42 | 42 | 0.05 | 0.48 | 1.00 | 0.01 | 0.0044 | 0.018 | 0.006 | 0.008 | 1.500 | 0.0009 | 0.95 | 2.16 | 2.23 | 2.00 | 0.03 | 0.030 | 2.15 | | 0.020 | 0.13 | 0.009 | | | 483 | 310 | Y | 0.724 | Inventive example |
| 43 | 43 | 0.06 | 0.26 | 1.76 | 0.12 | 0.0090 | 0.016 | 0.006 | 0.005 | 0.080 | 0.0005 | 1.47 | 0.20 | 2.16 | 1.51 | 0.20 | 0.083 | 1.91 | | | 0.14 | 0.004 | | | 557 | 320 | Y | 1.134 | Comparative example |
| 44 | 44 | 0.06 | 0.34 | 0.69 | 0.12 | 0.0050 | 0.005 | 0.008 | 0.008 | 0.030 | 0.0006 | 1.25 | 1.71 | 1.42 | 1.94 | 0.02 | 0.082 | 0.08 | | 0.020 | 0.11 | | 0.010 | | 541 | 420 | Y | 0.598 | Inventive example |
| 45 | 45 | 0.07 | 0.17 | 1.51 | 0.05 | 0.0014 | 0.018 | 0.001 | 0.005 | 0.020 | 0.0003 | 1.33 | 2.13 | 0.23 | 0.28 | 0.27 | 0.100 | 0.20 | | 0.010 | 0.03 | 0.007 | 0.010 | | 598 | 390 | Y | 0.875 | Inventive example |
| 46 | 46 | 0.07 | 0.41 | 1.08 | 0.12 | 0.0050 | 0.004 | 0.001 | 0.004 | 1.600 | 0.0008 | 0.70 | 1.30 | 0.74 | 0.07 | | | 1.14 | | 0.010 | 0.30 | 0.008 | 0.010 | | 700 | 400 | Y | 0.883 | Inventive example |
| 47 | 47 | 0.08 | 0.22 | 0.57 | 0.13 | 0.0048 | 0.004 | 0.007 | 0.007 | 0.050 | 0.0003 | 1.42 | 0.89 | 0.49 | 0.25 | | | 0.11 | 0.0025 | 0.030 | 0.25 | 0.006 | | | 709 | 310 | Y | 0.942 | Inventive example |
| 48 | 48 | 0.08 | 0.26 | 1.60 | 0.16 | 0.0023 | 0.024 | 0.001 | 0.002 | 0.060 | 0.0005 | 1.06 | 2.30 | 0.27 | 0.10 | 0.21 | 0.009 | 0.48 | | | 0.009 | | | | 597 | 320 | Y | 1.216 | Comparative example |
| 49 | 49 | 0.08 | 0.26 | 1.91 | 0.12 | 0.0041 | 0.017 | 0.005 | 0.009 | 0.050 | 0.0006 | 0.94 | 0.01 | 0.32 | 0.17 | | 0.052 | 0.98 | | | 0.008 | | | | 655 | 420 | Y | 0.551 | Inventive example |
| 50 | 50 | 0.08 | 0.32 | 2.10 | 0.16 | 0.0023 | 0.001 | 0.007 | | 0.040 | 0.0009 | 0.42 | 0.51 | 1.75 | 0.73 | 0.14 | 0.085 | 0.66 | | 0.030 | 0.03 | 0.004 | 0.005 | | 596 | 390 | Y | 1.672 | Comparative example |
| 51 | 51 | 0.09 | 0.13 | 1.99 | 0.14 | 0.0059 | 0.022 | 0.009 | 0.001 | 0.060 | 0.0010 | 0.81 | 0.46 | 0.63 | 1.52 | 0.01 | 0.072 | 1.25 | | 0.010 | 0.27 | | | | 550 | 400 | Y | 0.907 | Inventive example |
| 52 | 52 | 0.09 | 0.41 | 0.63 | 0.04 | 0.0013 | 0.013 | 0.004 | 0.002 | 2.000 | 0.0005 | 0.49 | 1.38 | | 0.91 | 0.32 | | 0.92 | | 0.010 | | | | | 673 | 420 | Y | 0.778 | Inventive example |
| 53 | 53 | 0.10 | 0.28 | 1.23 | 0.11 | 0.0023 | 0.006 | 0.009 | | 0.070 | 0.0003 | 1.34 | | 0.63 | | 0.07 | 0.077 | 1.90 | | | 0.19 | 0.005 | | 0.0025 | 744 | 330 | Y | 0.202 | Inventive example |
| 54 | 54 | 0.10 | 0.35 | 1.84 | 0.08 | 0.0022 | 0.012 | 0.006 | 0.008 | 0.080 | 0.0002 | 1.49 | 2.07 | 0.37 | 1.00 | | 0.011 | 1.64 | | 0.030 | | 0.009 | | | 503 | 410 | Y | 0.706 | Inventive example |
| 55 | 55 | 0.11 | 0.05 | 1.22 | 0.09 | 0.0050 | 0.026 | 0.001 | 0.007 | 0.100 | 0.0006 | 0.78 | | | | 0.09 | 0.017 | 1.03 | | 0.030 | | 0.005 | 0.010 | | 727 | 430 | Y | 0.047 | Inventive example |
| 56 | 56 | 0.11 | 0.12 | 1.92 | 0.12 | 0.0015 | 0.027 | 0.001 | 0.004 | 1.500 | 0.0009 | 1.78 | 2.50 | 2.06 | 0.41 | | 0.013 | 1.98 | | 0.010 | | 0.005 | | | 486 | 310 | Y | 0.050 | Inventive example |
| 57 | 57 | 0.11 | 0.43 | 1.12 | 0.05 | 0.0048 | 0.010 | 0.002 | 0.003 | 0.090 | 0.0010 | 1.49 | | 1.26 | 1.69 | 0.24 | | 0.12 | | 0.030 | 0.29 | 0.002 | 0.010 | | 602 | 370 | Y | 0.827 | Inventive example |
| 58 | 58 | 0.12 | 0.12 | 0.90 | 0.09 | 0.0022 | 0.029 | 0.005 | 0.007 | 0.070 | 0.0008 | | 0.75 | 0.73 | 0.04 | 0.15 | | 2.50 | | | | 0.002 | 0.010 | | 745 | 390 | Y | 0.106 | Inventive example |
| 59 | 59 | 0.12 | 0.23 | 0.70 | 0.04 | 0.0039 | 0.028 | 0.001 | 0.005 | 0.040 | 0.0002 | 2.16 | | 0.08 | 0.93 | 0.29 | 0.010 | 1.52 | | 0.020 | 0.15 | 0.07 | 0.010 | | 698 | 400 | Y | 0.895 | Inventive example |
| 60 | 60 | 0.13 | 0.05 | 0.43 | 0.10 | 0.0054 | 0.026 | 0.005 | 0.007 | 0.010 | 0.0009 | 1.77 | 2.16 | 1.55 | 1.91 | | | 1.29 | | 0.015 | 0.15 | 0.006 | | | 505 | 420 | Y | 0.459 | Inventive example |
| 61 | 61 | 0.13 | 0.09 | 0.61 | 0.14 | 0.0027 | 0.023 | 0.009 | 0.005 | 1.300 | 0.0005 | 1.93 | 0.10 | 2.50 | 0.58 | 0.04 | 0.097 | 2.31 | | | 0.07 | 0.004 | 0.010 | | 693 | 330 | Y | 0.607 | Inventive example |
| 62 | 62 | 0.13 | 0.40 | 1.24 | 0.13 | 0.0067 | 0.024 | 0.015 | 0.004 | 0.090 | 0.0006 | 1.78 | 2.37 | 2.47 | 1.74 | 0.48 | 0.034 | 0.14 | | | 0.24 | 0.008 | | | 428 | 310 | Y | 1.679 | Comparative example |
| 63 | 63 | 0.13 | 0.42 | 0.43 | 0.13 | 0.0059 | 0.011 | 0.002 | 0.003 | 1.100 | 0.0008 | 1.67 | 2.36 | 1.13 | 0.54 | 0.11 | 0.086 | 2.01 | | | 0.23 | 0.001 | 0.010 | | 612 | 320 | Y | 0.542 | Inventive example |
| 64 | 64 | 0.13 | 0.46 | 1.02 | 0.05 | 0.0075 | 0.016 | 0.003 | 0.007 | 0.090 | 0.0010 | 0.79 | | 1.97 | 1.12 | 0.25 | 0.036 | 1.64 | | 0.020 | 0.01 | 0.004 | 0.010 | | 653 | 420 | Y | 0.754 | Inventive example |
| 65 | 65 | 0.14 | 0.31 | 1.94 | 0.06 | 0.0036 | 0.035 | 0.008 | 0.009 | 0.090 | 0.0005 | 2.13 | 0.61 | 2.50 | 1.59 | 0.25 | 0.354 | 1.84 | | 0.020 | 0.26 | | 0.010 | | 471 | 400 | Y | 1.238 | Comparative example |
| 66 | 66 | 0.14 | 0.38 | 0.30 | 0.14 | 0.0017 | 0.008 | 0.008 | 0.008 | 0.080 | 0.0008 | 1.98 | 1.25 | 0.67 | 1.09 | 0.06 | 0.023 | 1.07 | | 0.010 | | 0.008 | 0.010 | | 637 | 420 | Y | 0.142 | Inventive example |
| 67 | 67 | 0.14 | 0.48 | 1.91 | 0.03 | 0.0030 | 0.018 | 0.002 | 0.003 | 0.020 | 0.0003 | 0.51 | 0.70 | | 0.28 | | 0.073 | 1.96 | | 0.030 | | | | | 675 | 330 | Y | 0.726 | Inventive example |
| 68 | 68 | 0.14 | 0.37 | 1.47 | 0.07 | 0.0038 | 0.019 | 0.006 | 0.004 | 0.0020 | 0.0008 | | | | | 1.11 | 0.048 | 2.16 | | 0.010 | 0.04 | 0.003 | 0.010 | | 590 | 410 | Y | 1.294 | Comparative example |
| 69 | 69 | 0.12 | 0.25 | 0.93 | 0.08 | 0.0028 | 0.024 | 0.008 | 0.006 | 2.600 | 0.0006 | 0.03 | | 0.80 | 0.50 | | | | | | | | | | 746 | 430 | N | 1.149 | Comparative example |
| 70 | 70 | 0.16 | 0.08 | 1.59 | 0.10 | 0.0045 | 0.009 | 0.001 | 0.004 | 0.008 | 0.0005 | | | | | | | | | | | | | | 733 | 420 | Could not be used as steel pipe, not evaluated | | Comparative example |
| 71 | 71 | 0.16 | 0.37 | 1.47 | 0.07 | 0.0038 | 0.019 | 0.006 | 0.004 | 0.008 | 0.0008 | 2.50 | 1.50 | 1.79 | | 0.11 | 0.048 | 2.16 | | 0.010 | 0.04 | 0.003 | 0.010 | | 583 | 370 | Could not be used as steel pipe, not evaluated | | Comparative example |
| 72 | 72 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 410 | Y | 1.087 | Comparative example |
| 73 | 73 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 420 | Y | 1.022 | Comparative example |
| 74 | 74 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 330 | Y | 0.989 | Inventive example |
| 75 | 75 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 310 | Y | 1.100 | Comparative example |
| 76 | 76 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 410 | Y | 0.992 | Inventive example |
| 77 | - | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 430 | Could not be rolled, not evaluated | | Comparative example |
| 78 | 78 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 700 | N | 1.122 | Comparative example |
| 79 | 79 | 0.12 | 0.12 | 0.90 | 0.09 | 0.0022 | 0.029 | 0.005 | 0.002 | 0.070 | 0.0008 | | 0.75 | 0.73 | 0.04 | 0.15 | | 2.50 | | | | 0.002 | 0.010 | | 745 | 240 | Y | 1.068 | Comparative example |
| 80 | 80 | 0.09 | 0.22 | 1.20 | 0.07 | 0.0027 | 0.025 | 0.008 | 0.008 | 0.010 | 0.0003 | 1.21 | | | | | | | | | | | | | 768 | 460 | Y | 0.681 | Inventive example |

*1 The remainder is composed of Fe and incidental impurities
Blank: no particularly intended addition
Underline: outside the scope of the present invention

EXAMPLE 2

Examples in which the advantages of the present invention have been verified are described below. In the following examples, steel materials were produced under the following production conditions and were characterized. Steel materials Nos. 17A, 26A, 55A, and 67A were produced using slabs with the same chemical composition as steel materials Nos. 17, 26, 55, and 67 shown in Tables 1-1 and 1-2 under the same conditions as the steel materials Nos. 17, 26, 55, and 67 shown in Example 1 up to the controlled cooling step. For the steel materials Nos. 17A, 26A, and 55A, steel pipes were formed by the pipe production step of forming each steel material (hot-rolled steel plate (sheet)) into a cylindrical shape by cold roll forming and subjecting both circumferential end portions thereof to butt electric resistance welding. For the steel material 67A, a steel pipe was formed by the pipe production step of bending the steel material (hot-rolled steel plate) and butt-welding both end portions thereof. As shown in Table 2, characterization was performed while the dehydrogenation treatment conditions were changed. Table 2 shows the results.

The dehydrogenation treatment of the steel materials Nos. 17, 26, 55, and 67 in Example 1 was performed with the dehydrogenation treatment temperature T (ambient temperature) kept at room temperature and the holding time set to 96 hours, but the dehydrogenation treatment temperature T (ambient temperature) in the present example was 50°C. For the steel pipes Nos. 81, 84, 86, and 88, the dehydrogenation treatment temperature T (ambient temperature) was 50°C, and the holding time tc after the temperature Tc at the thickness center reached 50°C satisfied the formula (A). For the steel pipes Nos. 82, 85, 87, and 89, the dehydrogenation treatment temperature T (ambient temperature) was 50°C, and the holding time t satisfied the formula (A) at a dehydrogenation treatment temperature T of 50°C, but the holding time tc after the temperature Tc at the thickness center reached 50°C did not satisfy the formula (A). For the steel pipe No. 83, the dehydrogenation treatment temperature T (ambient temperature) was 50°C, but neither the holding time t at the ambient temperature nor the holding time tc after the temperature Tc at the thickness center reached 50°C satisfied the formula (A).

In Table 2, "Dehydrogenation holding time t is Y" means that the dehydrogenation treatment temperature T (ambient temperature) is 50°C and the holding time t satisfies the formula (A), and "Dehydrogenation holding time t is N" means that the dehydrogenation treatment temperature T (ambient temperature) is 50°C, but the holding time t does not satisfy the formula (A). Furthermore, "Holding time tc at center temperature Tc of steel plate thickness is Y" means that the holding time tc after the temperature Tc at the thickness center reaches 50°C satisfies the formula (A), and "Holding time tc at center temperature Tc of steel plate thickness is N" means that the temperature Tc at the thickness center reaches 50°C, but the holding time tc after Tc reaches 50°C does not satisfy the formula (A). The examples of the present invention all satisfied the condition that the crack growth rate da/dN in hydrogen gas was $1.0 \times 10^{-6}$ m/cycle or less. Among them, the crack propagation characteristics were better when the dehydrogenation treatment was performed under more suitable conditions.

[Table 2]

| Steel material No. | Steel pipe No. | Dehydrogenation holding time t | Holding time tc at steel material center temperature $T_C$ | Nb carbide | Crack growth rate in hydrogen at $\Delta K=20$ ($MPa \cdot m^{1/2}$) $10^{-6}$ m/cycle | Notes |
|---|---|---|---|---|---|---|
| 17A | 81 | Y | Y | Y | 0.698 | Inventive example |
| 17A | 82 | Y | N | Y | 0.889 | Inventive example |
| 17A | 83 | N | N | Y | 0.912 | Inventive example |
| 26A | 84 | Y | Y | Y | 0.286 | Inventive example |
| 26A | 85 | Y | N | Y | 0.338 | Inventive example |
| 55A | 86 | Y | Y | Y | 0.033 | Inventive example |
| 55A | 87 | Y | N | Y | 0.069 | Inventive example |
| 67A | 88 | Y | Y | Y | 0.681 | Inventive example |
| 67A | 89 | Y | N | Y | 0.722 | Inventive example |

Claims

1.   A steel material with a good fatigue property in hydrogen, the steel material having a chemical composition comprising:

on a mass percent basis,
C: 0.02% to 0.15%,
Si: 0.05% to 0.5%,
Mn: 0.3% to 2.0%,
Al: 0.01% to 0.15%,
N: 0.0005% to 0.008%,
P: 0.03% or less,
S: 0.01% or less,
O: 0.01% or less,
Nb: more than 0% and 2.5% or less,
H: 0.0010% or less,
Cu: 0% to 2.5%,
Ni: 0% to 2.5%,
Cr: 0% to 2.5%,
Mo: 0% to 2.0%,
V: 0% to 0.5%,
Ti: 0% to 0.5%,
W: 0% to 2.5%,
B: 0% to 0.005%,
Sn: 0% to 0.03%,
Sb: 0% to 0.3%,
Ca: 0% to 0.01%,
Mg: 0% to 0.01%, and
REM: 0% to 0.005%,
the remainder being Fe and incidental impurities,
wherein the number of Nb precipitates with an equivalent circular diameter of 2 nm or more and 100 nm or less is 10 pieces/$\mu m^2$ or more, and
a crack growth rate da/dN at a stress intensity factor of 20 MPa $\sqrt{m}$ in hydrogen of 1 MPa or more is 1.0 x $10^{-6}$ m·$cycle^{-1}$ or less.

2. A method for producing a steel material, the method comprising:

a heating step of heating a slab with the chemical composition according to Claim 1 at 1000°C to 1250°C;
a hot rolling step of rolling the slab heated in the heating step at a finish rolling delivery temperature of an Ar$_3$ temperature or higher;
a controlled cooling step of cooling a steel plate obtained in the hot rolling step under a condition in which an average cooling rate in the range of 1000°C to 400°C is 10°C/s or more in terms of a temperature at a plate thickness center and a cooling stop temperature ranges from 250°C to 650°C; and
a dehydrogenation treatment step of subjecting the steel plate obtained in the controlled cooling step to dehydrogenation treatment.

3. A steel pipe with a good fatigue property in hydrogen, the steel pipe having a chemical composition comprising:

on a mass percent basis,
C: 0.02% to 0.15%,
Si: 0.05% to 0.5%,
Mn: 0.3% to 2.0%,
Al: 0.01% to 0.15%,
N: 0.0005% to 0.008%,
P: 0.03% or less,
S: 0.01% or less,
O: 0.01% or less,
Nb: more than 0% and 2.5% or less,
H: 0.0010% or less,
Cu: 0% to 2.5%,
Ni: 0% to 2.5%,

Cr: 0% to 2.5%,
Mo: 0% to 2.0%,
V: 0% to 0.5%,
Ti: 0% to 0.5%,
W: 0% to 2.5%,
B: 0% to 0.005%,
Sn: 0% to 0.03%,
Sb: 0% to 0.3%,
Ca: 0% to 0.01%,
Mg: 0% to 0.01%, and
REM: 0% to 0.005%,
the remainder being Fe and incidental impurities,
wherein the number of Nb precipitates with an equivalent circular diameter of 2 nm or more and 100 nm or less is 10 pieces/$\mu$m$^2$ or more, and
a crack growth rate da/dN at a stress intensity factor of 20 MPa $\sqrt{m}$ in hydrogen of 1 MPa or more is 1.0 x 10$^{-6}$ m·cycle$^{-1}$ or less.

4. A method for producing a steel pipe, the method comprising:

a heating step of heating a slab with the chemical composition according to Claim 3 at 1000°C to 1250°C;
a hot rolling step of rolling the slab heated in the heating step at a finish rolling delivery temperature of an Ar$_3$ temperature or higher;
a controlled cooling step of cooling a hot-rolled steel plate obtained in the hot rolling step under a condition in which an average cooling rate in the range of 1000°C to 400°C is 10°C/s or more in terms of a temperature at a plate thickness center and a cooling stop temperature ranges from 250°C to 650°C; and
any one of a pipe production step of bending the hot-rolled steel plate and butt-welding both end portions thereof after the controlled cooling step, and a pipe production step of forming the hot-rolled steel plate into a cylindrical shape by cold roll forming and subjecting both circumferential end portions of the cylindrical shape to butt electric resistance welding after the controlled cooling step; and
a dehydrogenation treatment step of subjecting the steel pipe obtained in the pipe production step to dehydrogenation treatment.

## INTERNATIONAL SEARCH REPORT

| International application No. |
|---|
| **PCT/JP2023/035555** |

| A. | CLASSIFICATION OF SUBJECT MATTER |
|---|---|

*C22C 38/00*(2006.01)i; *C21D 8/02*(2006.01)i; *C21D 8/10*(2006.01)i; *C22C 38/60*(2006.01)i
FI:   C22C38/00 301F; C22C38/00 301Z; C22C38/60; C21D8/02 C; C21D8/10 C

According to International Patent Classification (IPC) or to both national classification and IPC

| B. | FIELDS SEARCHED |
|---|---|

Minimum documentation searched (classification system followed by classification symbols)

C22C38/00-38/60; C21D8/02; C21D8/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/137812 A1 (JFE STEEL CORPORATION) 02 July 2020 (2020-07-02)<br>claims | 1-4 |
| A | JP 2022-68942 A (JFE STEEL CORPORATION) 11 May 2022 (2022-05-11)<br>claims | 1-4 |
| A | WO 2014/156187 A1 (JFE STEEL CORPORATION) 02 October 2014 (2014-10-02)<br>claims | 1-4 |
| A | WO 2017/047099 A1 (JFE STEEL CORPORATION) 23 March 2017 (2017-03-23)<br>claims | 1-4 |
| A | JP 2012-122103 A (SUMITOMO METAL IND LTD) 28 June 2012 (2012-06-28)<br>claims | 1-4 |
| A | WO 2022/030818 A1 (POSCO) 10 February 2022 (2022-02-10)<br>claims | 1-4 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/035555** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2018-12855 A (NIPPON STEEL & SUMITOMO METAL CORP) 25 January 2018 (2018-01-25)<br>claims | 1-4 |
| P, A | WO 2022/209896 A1 (JFE STEEL CORPORATION) 06 October 2022 (2022-10-06)<br>claims | 1-4 |

Form PCT/ISA/210 (second sheet) (January 2015)

**INTERNATIONAL SEARCH REPORT**
Information on patent family members

International application No.

**PCT/JP2023/035555**

| Patent document cited in search report | | | Publication date (day/month/year) | Patent family member(s) | | | Publication date (day/month/year) |
|---|---|---|---|---|---|---|---|
| WO | 2020/137812 | A1 | 02 July 2020 | EP claims | 3904541 | A1 | |
| | | | | US | 2022/0064770 | A1 | |
| | | | | CN | 113272452 | A | |
| JP | 2022-68942 | A | 11 May 2022 | (Family: none) | | | |
| WO | 2014/156187 | A1 | 02 October 2014 | EP claims | 2980246 | A1 | |
| | | | | US | 2016/0053355 | A1 | |
| | | | | CN | 105102657 | A | |
| WO | 2017/047099 | A1 | 23 March 2017 | EP claims | 3351650 | A1 | |
| | | | | US | 2018/0312935 | A1 | |
| | | | | CN | 108026619 | A | |
| JP | 2012-122103 | A | 28 June 2012 | (Family: none) | | | |
| WO | 2022/030818 | A1 | 10 February 2022 | EP claims | 4194581 | A1 | |
| | | | | CN | 116113722 | A | |
| | | | | JP | 2023-536356 | A | |
| JP | 2018-12855 | A | 25 January 2018 | (Family: none) | | | |
| WO | 2022/209896 | A1 | 06 October 2022 | JP | 7226656 | B1 | |

Form PCT/ISA/210 (patent family annex) (January 2015)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005002386 A
- JP 2009046737 A
- JP 2009275249 A
- JP 2009074122 A
- JP 2010037655 A
- JP 2012107332 A

**Non-patent literature cited in the description**

- **MATSUNAGA et al.** *Int J Hydrogen Energy*, 2015, vol. 40, 5739-5748